# EUROPÄISCHE PATENTANMELDUNG

(11) **EP 1 842 720 A2**
(43) Veröffentlichungstag der Anmeldung: **10.10.2007**
(21) Anmeldenummer: 07006464.7
(22) Anmeldetag: 29.03.2007
(51) Int. Cl.: B60P 3/38

(54) **Hochbettleiter für Fahrzeuge**

(30) Priorität: 07.04.2006 DE 202006005724 U
(71) Anmelder: Hymer AG, 88339 Bad Waldsee (DE)
(72) Erfinder: Hohl, Bernd, 88339 Bad Waldsee (DE); Ehl, Stefan, 88214 Ravensburg (DE)
(74) Vertreter: Riebling, Peter

(57) **Zusammenfassung**

Die Erfindung betrifft eine Hochbettleiter (4), insbesondere für ein Hubbett (1) für Fahrzeuge wie Wohnmobile oder Wohnwagen oder dergleichen, wobei das Bett (1) eine Liegefläche (2), einen Rahmen (3), sowie eine dazwischen befindliche Auflage wie z.B. Lattenrost aufweist, und wobei die Leiter (4) in ihrer oberen Stauposition unterhalb der Auflage der Liegefläche (2) verstaubar ist und aus dieser oberen Stauposition in eine obere Zwischenposition ausziehbar ist, sowie von dieser oberen Zwischenposition über mindestens zwei Schwenkgelenke (11) um eine etwa horizontale Achse in eine untere Nutzposition herabschwenkbar ist, wobei die Leiter (4) beim Ausziehen von ihrer oberen Stauposition in ihre obere Zwischenposition mittelbar oder unmittelbar mit einem Schlitten (10) über ihre mindestens zwei Schwenkgelenke (11) verbindbar ist, welche das Abschwenken der Leiter (4) von ihrer oberen Zwischenposition in ihre unteren Nutzposition an dem Schlitten (10) ermöglichen, welcher seitlich verschiebbar ist, etwa parallel zu demjenigen Rahmenteil (3c) des Rahmens (3) des Bettes (1), welches dem Innenraum des Fahrzeugs zugewandt ist. Vorteil ist, dass die Leiter in ihrer Nutzposition einen Zugang zum Hochbett an jeder Stelle einer Seite des Bettrahmens ermöglicht, was zu einer Erhöhung der Bequemlichkeit und Sicherheit führt. Weiterhin kann die Leiter einfach und rasch als ganzes unterhalb des Hochbettes in dessen Querrichtung verstaut werden, ohne die Leiter verkleinern, z.B. teleskopieren, zu müssen, was zu einer Erhöhung der Bequemlichkeit, als auch einer Kosteneinsparung beiträgt. Auch wird durch die Verstauposition der Leiter unterhalb der Auflage des Hochbetts kostbarer Platz im davor liegenden Nutz-/Wohnraum gewonnen. Weiterer Vorteil ist die hohe Stabilität und Standsicherheit der Leiter durch die zwei Schwenklager.

## Beschreibung

Die Erfindung betrifft eine Hochbettleiter für Fahrzeuge, und insbesondere ein Hubbett für Wohnmobile oder Wohnwagen oder dergleichen, nach dem Oberbegriff des Patentanspruchs 1.

Die DE 202 19 175 U1 zeigt eine derartige Leiter in einem Wohnmobil für ein Alkovenbett, die zwischen Fahrerhaus, Bodenplatte Schlafraum und Lattenrost in Führungsschienen aus- und einschiebbar geführt ist und dort verstaubar ist. Die Leiter ist sowohl in ihrer Benutzungs- als auch in ihrer Verstauposition längs zur Fahrtrichtung des Wohnmobils angeordnet. Nachteil ist, dass nur an einer vordefinierten Stelle des Bettrahmens ein Zugang zum Bett ermöglicht wird, so dass alle Nutzer des Bettes über die gleiche Stelle in das Bett gelangen müssen, sowie die davor befindliche Fläche auf dem Fahrzeugboden zum Aufbauen der Leiter frei gehalten oder frei geräumt werden muss, was zu unerwünschten Unbequemlichkeiten führt.

Die DE 101 09 054 A1 zeigt eine Einstiegshilfe (Leiter) für eine Liege in einem Führerhaus eines LKW. Die Leiter weist geneigt aufeinander zu verlaufende Seitenholme mit einem gemeinsamen Kugel-Kopfteil auf, welches in einem zugeordneten Lagerteil am Rahmen der Liege, längsverschieblich zur Liegerichtung, in sich drehbar und relativ zur Liege schwenkbar ausgebildet ist. Die Leiter wird in ihrer Staulage auf der Unterseite der Liege durch einhaken in Rasthaken fixiert, so dass die Leiter in Längsrichtung der Liegefläche orientiert ist. Das Kugel-Kopfteil mit zugehörigem Lagerteil zur Längsverstellbarkeit, Drehbarkeit und Schwenkbarkeit ist relativ aufwändig in seiner Herstellung und daher kostenintensiv und ist durch die vielen Freiheitsgrade der Beweglichkeit nur bei genauester Handhabung optimal standfest.

Die DE 10359903 A1 zeigt eine Alkovenleiter für eine erhöhte Schlafniesche (Hochbett) in einem Wohnwagen, Reisemobil oder dergl., wobei die Leiter mit ihrem Führungsschlitten auf einer am Bett-Rahmen befestigten Führungsschiene seitlich verschiebbar ist. Dabei ist die Leiter derart mit ihrem Führungsschlitten verbunden, dass sie in ihre Gebrauchs- und Ruhestellung verschwenkbar ist, und in ein Fach eines Schrankes seitlich parallel zum Bett-Rahmen verschiebbar ist. Nachteil ist, dass die Leiter in ihrer Ruhestellung wertvollen Platz vor dem Bett oder in dem Schrankfach beansprucht.

Aufgabe der Erfindung ist es daher, eine gattungsgemäße Leiter für ein Hochbett, insbesondere Hubbett in Fahrzeugen, derart weiterzubilden, dass ein Nutzer das Bett über die Leiter wesentlich bequemer und sicherer erreichen kann, sowie dieses wieder wesentlich bequemer und sicherer verlassen kann. Weiterhin soll auch bei einem sehr hoch angeordneten Hochbett die Leiter einfach aufgebaut und daher kostengünstig sein. Zudem soll die Leiter in ihrer Verstauposition keinen Wohn/Nutzraum vor dem Hochbett belegen.

Zur Lösung der Aufgaben dienen die Merkmale des Patentanspruches 1.

Wesentlich dabei ist, dass die Leiter in ihrer oberen Stauposition unterhalb der Auflage der Liegefläche verstaubar ist und aus dieser oberen Stauposition in eine obere Zwischenposition ausziehbar ist, sowie von dieser oberen Zwischenposition über mindestens zwei Schwenkgelenke um eine etwa horizontale Achse in eine untere Nutzposition herabschwenkbar ist, wobei die Leiter beim Ausziehen von ihrer oberen Stauposition in ihre obere Zwischenposition mittelbar oder unmittelbar mit einem Schlitten über ihre mindestens zwei Schwenkgelenke verbindbar ist, welche das Abschwenken der Leiter von ihrer oberen Zwischenposition in ihre unteren Nutzposition an dem Schlitten ermöglichen, welcher seitlich verschiebbar ist, etwa parallel zu demjenigen Rahmenteil des Rahmens des Bettes, welches dem Innenraum des Fahrzeugs zugewandt ist.

Vorteil ist, dass die Leiter in ihrer Nutzposition einen Zugang zum Hochbett an jeder Stelle einer Seite des Bettrahmens ermöglicht, was zu einer Erhöhung der Bequemlichkeit und Sicherheit führt. Weiterhin kann die Leiter einfach und rasch als ganzes unterhalb des Hochbettes in dessen Querrichtung verstaut werden, ohne die Leiter verkleinern, z.B. teleskopieren, zu müssen, was zu einer Erhöhung der Bequemlichkeit, als auch einer Kosteneinsparung beiträgt. Auch wird durch die Verstauposition der Leiter unterhalb der Auflage des Hochbetts kostbarer Platz im davor liegenden Nutz-/Wohnraum gewonnen. Weiterer Vorteil ist die hohe Stabilität und Standsicherheit der Leiter durch die zwei Schwenklager.

Vorteilhafte Weiterbildungen der Erfindung sind Gegenstand der abhängigen Ansprüche.

Vorteilhaft ist, wenn der Schlitten mitsamt der Leiter etwa quer oder aber parallel zur Liegerichtung des Bettes verschiebbar ist.

Weiterhin ist vorteilhaft, wenn die Leiter mit beiden Holmen über den Rahmen hinaus verschiebbar ist, da dann die gesamte Tiefe der Leiter genutzt werden kann. In einer anderen Ausführungsform ist es aber auch vorgesehen, dass die Leiter nur teilweise mit ihren Holmen über den Rahmen hinaus verschoben wird, so dass mehr Platz vor dem Bett verbleiben kann.

Bevorzugt sind zwei zueinander parallele Seitenholme der Leiter vorgesehen, jedoch können die Seitenholme auch leicht im Winkel verlaufen oder nur der innere Seitenholm parallel zum Bettrahmenteil verlaufen und der abgewandte Seitenholm schräg hierzu verlaufen. Wichtig ist jedoch immer, dass im Bereich der Anlenkung an die Schiene mindestens zwei Schwenkgelenke vorhanden sind, welche eine Bewegung der Leiter nur um einen bzw. zwei Freiheitsgrade ermöglicht, nämlich die Verschwenkung der Leiter um eine horizontale Achse (sowie Linearverschiebung zur Liegefläche), und welche eine eindeutige Aufstandsfläche auf dem Boden des Fahrzeugs und damit genügende Standfestigkeit und Stabilität mit sich bringen.

Insbesondere sind zwei Leiterholme mit je einem Schwenkgelenk am oberen Ende vorhanden.

Der insbesondere C- oder U-förmige Schlitten selbst ist auf einer bettrahmenfesten stangenförmigen Gleitführung aufgenommen. Natürlich kann auch eine kugelgelagerte Führung des Schlittens vorgesehen sein.

Die Enden der Leiter werden in einer bettrahmenfesten Gleitführung aufgenommen, welche unterhalb der Liegefläche senkrecht zur stangenförmigen Gleitführung für den C- oder U-förmigen Schlitten angeordnet ist.

Die gesamte Leiteranordnung ist in ihrer Stauposition derart unterhalb der Liegefläche des Hochbettes an dessen Rahmen befestigt, dass diese Leiteranordnung nicht oder nur geringfügig nach unten hin über den Rahmen des Hochbettes hinaus ragt.

Insbesondere wird die erfindungsgemäße Leiter an einem in der Höhe verstellbaren Hubbett in einem Wohnmobil oder Caravan eingesetzt, so dass die Länge der Leiter nicht über die Breite des Bettes hinausgeht, ja sogar nur einen Teil (ca. 75%) davon ausmacht. Damit muss die Leiter nicht teilbar oder teleskopierbar ausgebildet sein und ist daher sehr kostengünstig. Bevorzugt ist dabei das erfindungsgemäße Hub/Hochbett quer zur Fahrtrichtung des Fahrzeugs angeordnet, kann aber in anderen Ausführungen durchaus auch in Fahrtrichtung des Fahrzeugs angeordnet sein.

Im Folgenden wird die Erfindung anhand von lediglich einen Ausführungsweg darstellende Zeichnungen näher erläutert. Hierbei gehen aus den Zeichnungen und ihrer Beschreibung weitere wesentliche Merkmale und Vorteile der Erfindung hervor.

Es zeigt:
Figur 1: Das erfindungsgemäße Hochbett als Hubbett mit der Leiter in Stauposition;
Figur 2: Das Hubbett nach Figur 1 in abgesenkter Stellung mit der Leiter in ausgezogener, aber noch nicht nach unten verschwenkter Zwischenposition;
Figur 3: Das Hubbett nach Figur 2 mit der Leiter in ausgezogener und nach unten verschwenkter Nutzposition;
Figur 4: Das Hubbett nach Figur 3 mit der Leiter in seitlich nach links verschobener Nutzposition;
Figur 5: Vergrößerte Ansicht der Leiteranordnung der Figur 1 ohne Hubbett;
Figur 6: Figur 5 mit teilweise entferntem Leiterrahmen;
Figur 7: Vergrößerte Ansicht der Leiteranordnung der Figur 2 ohne Hubbett;
Figur 8: Vergrößerte Ansicht der Leiteranordnung der Figuren 3 und 4 ohne Hubbett;
Figur 9: Vergrößerte Ansicht der Figur 6 mit entfernter Leiter;
Figur 10: Vergrößerte Ansicht des Schnitts entlang der Linie X-X der Figur 9, wobei nur der vertikale Schenkel des C- oder U-förmigen Schlittens dargestellt ist.

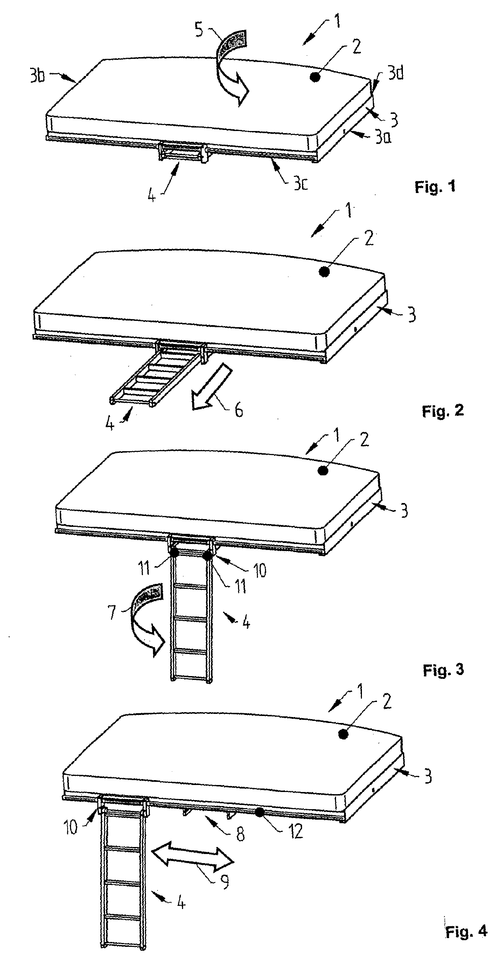

Figuren 1-4 zeigen das erfindungsgemäße Hochbett in Form eines Hubbetts 1, welches aus einer Liegefläche 2 bzw. Matratze besteht, die auf einem nicht gezeigten Lattenrost als Auflage ruht, der wiederum in einer Rahmenkonstruktion 3 aufgenommen ist. Die Rahmenkonstruktion 3 besteht aus zwei parallelen kurzen Rahmenseiten 3a, 3b und zwei langen Rahmenseiten 3c, 3d, wovon die in das Fahrzeuginnere weisende Rahmenseite 3c gerade ausgebildet ist und das zur Fahrzeugaußenwand weisende Rahmenseite 3d zur Fahrzeugaußenwand hin gewölbt ausgebildet ist. Durch die konvexe Wölbung der äußeren Rahmenseite 3d ergibt sich im herunterverschwenkten Benutzungszustand des Hubbetts 1 kein oder nahezu kein Spalt zwischen Bett 1 und Fahrzeugaußenwand. Der Rahmen 3 besitzt eine seitliche zentrale Ausnehmung 8 in der vorderen langen Seite 3c des Rahmens 3, die dem Innenraum (Wohnraum) des Fahrzeugs zugewandt ist, zur Aufnahme der eingeschobenen Leiter 4.

Das Aufbauen des Hubbetts 1 geschieht in der Reihenfolge der Figuren 1, 2 und 3.

Zunächst wird gemäß Figur 1 das Hubbett 1 von einer oberen Staustellung in Absenkrichtung 5 in eine untere Nutzstellung gebracht. Durch die Hubmechanik (z.B. 4-oder 6-Gelenk-Kinematik) wird das Hubbett 1 auf einer bogenförmigen Kurve (Pfeil Absenkrichtung 5) nach unten in Nutzstellung gebracht.

Danach wird gemäß Figur 2 die Leiter 4 mittels der Linearführung aus dem Rahmen 3 des Hubbetts 1 von einer oberen Staustellung in Linearverschiebungsrichtung 6 herausgezogen, bis in einer oberen Zwischenstellung beide Holme 4a, 4b aus dem Rahmen 3 heraustritt.

Schließlich wird gemäß Figur 3 mittels der Schwenkgelenke 11 die Leiter 4 nach unten in Schwenkrichtung 7 in die untere Nutzposition abgeschwenkt.

Die Auszugsleiter 4 besteht aus zwei parallel zueinander beabstandeten Holmen 4a, 4b und dazwischen befindliche zueinander beabstandete Sprossen 4c-4f, wie aus dem Stand der Technik bereits bekannt. Zusätzlich ist aber im Bereich des in Staustellung vorn befindlichen Endes 4i, 4j der Holme 4a, 4b ein diese überbrückender rundzylindrischer Handgriff 4k vorhanden.

Am in der Nutzstellung oben befindlichen Ende 4g, 4h der Holme 4a, 4b ist nun je ein Schwenklager 11 vorhanden, welche um eine horizontale Achse gemeinsam schwenkbar ausgebildet sind. Da die Schwenklager 11 zueinander beabstandet befestigt sind, kann die Leiter 4 aus einer leicht aus der Senkrechten geneigten Nutzstellung (Figuren 3 und 4) in eine horizontale Staustellung (Figuren 1 und 2) gebracht werden und analog umgekehrt wie oben beschrieben.

Der C- oder U-förmige Schlitten 10 ist nun auf der fest mit dem Rahmen 3 des Bettes 1 verbundenen stangenförmigen Schienenführung 12 aufgenommen und dort längs zur Liegerichtung des Bettes 1 in den Schieberichtungen 9 verschiebbar geführt.

Die Enden 4g, 4h, 4i, 4j der Holme 4a, 4b werden in der Staustellung mittels zwei parallel zueinander beabstandeten Schienen 8a, 8b eines Verstaurahmens 8 gelagert und während des Ausziehens in Schieberichtung 6 aus dem Verstaurahmen 8 in diesem gleitend geführt. Die beiden Schienen 8a, 8b des Verstaurahmens 8 sind nach vorn zum Benutzer hin offen ausgebildet, nach hinten aber durch eine Verbindung 8c miteinander stabilisierend gekoppelt.

Die unteren freien Enden 4i, 4j der Holme 4a, 4b sind jeweils derart abgeschrägt, dass diese in der Nutzstellung der Leiter 4 auf dem Boden (nicht dargestellt) des Fahrzeugs satt aufliegen.

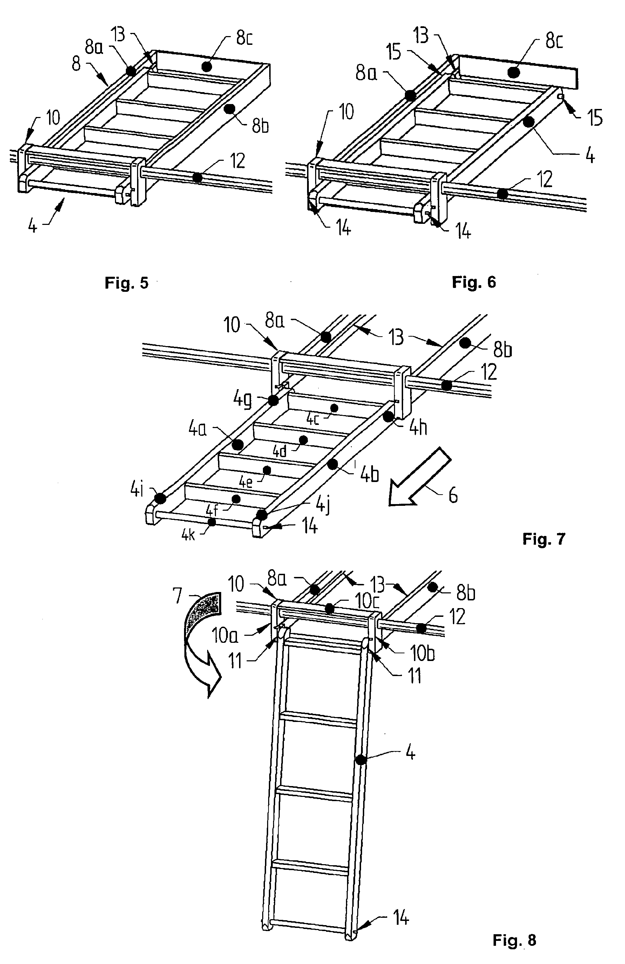

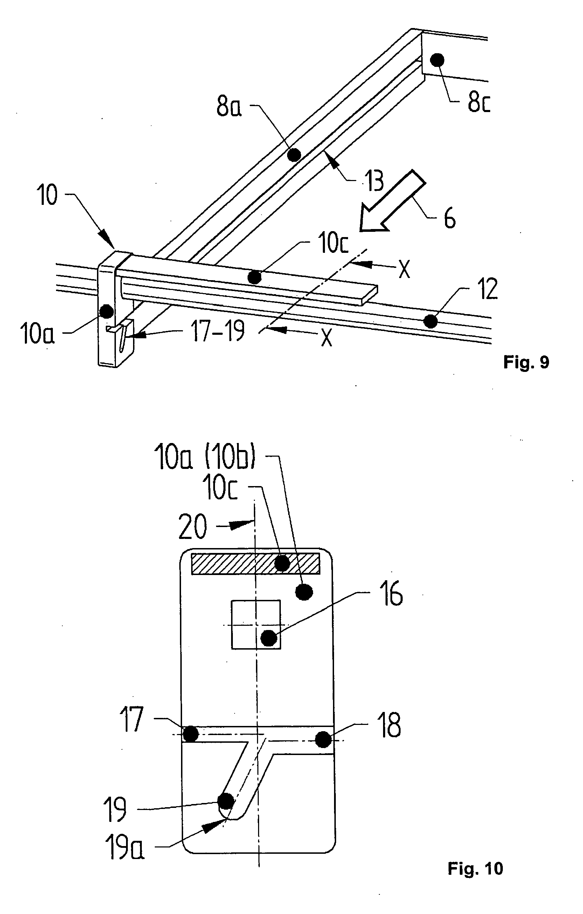

Figuren 9 und 10 zeigen nun die erfindungsgemäße detaillierte Mechanik der Lagerung und des Ein-/Ausfahrens der Leiter 4 in/aus dem Verstaurahmen 8 in/aus dem Schlitten 10 in den Linearverschiebungsrichtungen 6 (Figuren 2 und 7).

Nach Figur 9 besitzen die beiden Schienen 8a, 8b des Verstaurahmens 8 auf der gegenseitig zugewandten Innenseite jeweils eine Längsnut 13, die sich in Linearverschiebungsrichtungen 6 der Leiter 4 erstrecken. Dort greifen die hinteren Zapfen 15 auf der Außenseite der Holme 4a, 4b der Leiter 4 längsverschiebar ein und werden dort während des Ein-Ausfahrens der Leiter 4 in/aus den/dem Verstaurahmen 8 geführt.

Auf den einander zugewandten Innenseiten der Vertikalschenkel 10a, 10b des Schlittens 10 ist gemäß Figur 10 eine breite horizontale Durchgangsnut 18 vorhanden, welche in eine schmale horizontale Durchgangsnut 17 übergeht, wobei im Übergangsbereich der beiden Nute 17, 18 eine breite schräge Sacknut 19 nach schräg unten vorn in Richtung auf den Benutzer zu abzweigt.

Die Vertikalschenkel 10a, 10b des Schlittens 10 sind durch die Horizontalverbindung 10c miteinander verbunden, wobei diese die Vertikalschenkel 10a, 10b in der Breite der Schienen 8a, 8b des Verstaurahmens 8 überbrückt. Unterhalb der Verbindung 10c ist in den Vertikalschenkeln 10a, 10b eine Führungsöffnung 16 vorhanden, in welche die Stangenführung 12 zur Längsverschiebung 9 (Figur 4) des Schlittens 10 eingreift. Die Darstellung nach Figur 10 gilt für den linken Vertikalschenkel 10a der Figuren 1-9, wobei der rechte Vertikalschenkel 10b identisch ausgebildet ist, jedoch spiegelbildlich zur Hochachse 20.

Wie am besten aus Figur 6 ersichtlich ist, lagern in der Verstaustellung der Leiter 4 die beiden hinteren Zapfen 15 der oberen Enden 4g, 4h der Holme 4a, 4b der Leiter 4 in den Nuten 13 der Schienen 8a, 8b des Verstaurahmens 8 und die beiden vorderen Zapfen 14 der unteren Enden 4i, 4j der Holme 4a, 4b der Leiter 4 lagern in den Nuten 19 der Vertikalschenkel 10a, 10b auf deren Nutengrund 19a. Damit ist die Leiter 4 vor unbeabsichtigtem Heraustreten z.B. beim Beschleunigen oder Abbremsen oder Kurvenfahren des Fahrzeugs gesichert.

Soll nun die Leiter 4 von ihrer oberen Verstaustellung nach Figuren 1, 5, 6 in ihre obere Zwischenposition nach Figuren 2, 7 in Verschieberichtung 6 herausgezogen werden, so wird die Leiter 4 an ihrem Handgriff 4k ein kleines Stück nach oben hinten geführt, so dass die vorderen Zapfen 14 aus den Schrägnuten 19 in die Horizontalnuten 18 gelangen (Figur 9). Anschließend wird die Leiter 4 an ihrem Handgriff 4k in Verschieberichtung 6 nach vorn in Richtung Benutzer gezogen, so dass die vordere Zapfen 14 durch die kleinen Horizontalnuten 17 hindurch ins Freie geführt werden, wobei die hinteren Zapfen 15 in den Nuten 13 der Schienen 8a, 8b des Verstaurahmens 8 geführt werden und sich dort abstützen.

Sind die vorderen Zapfen 14 außer Eingriff mit den kleinen Horizontainuten 17 im Freien, kann die Leiter 4 an ihrem Handgriff 4k nach unten in Schwenkrichtung 7 (Figur 3) auf den Boden des Fahrzeugs verschwenkt werden, solange bis die hinteren Zapfen 15 in die großen Horizontalnuten 18 einlaufen und in die Schrägnuten 19 auf deren Grund 19a fallen, wo sie die Sicherung der Leiter 4 in Nutzposition bewerkstelligen, zusammen mit der Auflage der Enden 4i, 4j der Holme 4a, 4b der Leiter 4 auf dem Fahrzeugboden.

Die breiten Horizontalnuten 18 und breiten Schrägnuten 19 in den Vertikalschenkeln 10a, 10b des Schlittens 10 sind daher so dimensioniert, dass sie sowohl die durchmesserkleineren vorderen Zapfen 14, als auch die durchmessergrößeren hinteren Zapfen 15 der Leiterholme 4a, 4b aufnehmen können. Durch die schmale Horizontalnuten 17 passen jedoch nur die durchmesserkleineren vorderen Zapfen 14 der Leiterholme 4a, 4b, nicht aber die durchmessergrößeren hinteren Zapfen 15 der Leiterholme 4a, 4b, welche dadurch gesperrt werden.

Liegen die hinteren Zapfen 15 in den Schrägnuten 19, kann die schräg nach unten stehende Leiter 4 in den Längsverschiebungsrichtungen 9 verschoben werden.

Soll die Leiter 4 wieder aus ihrer seitlich verschobenen Nutzposition nach Figur 4 wieder in ihre Stauposition nach Figuren 1, 5, 6 gebracht werden, muss zunächst die Leiter 4 leicht vom Fahrzeugboden nach oben in Schwenkrichtung 7 verschwenkt werden und anschließend die Leiter 4 in Längsverschiebungsrichtung 9 so verschoben werden, dass der Schlitten 10 mit dem Verstaurahmen 8 derart fluchtet, dass die Nuten 18 des Schlittens 10 mit den Nuten 13 des Verstaurahmens 8 fluchten. Nun kann das Verstauen der Leiter 4 analog umgekehrt zum Aufbauen wie oben beschrieben geschehen, wobei die Sicherung der Leiter in der oberen Stauposition durch Einrasten der vorderen/unteren Lagerzapfen 14 in die schrägen Sacknuten 19 erfolgt.

### Figurenlegende

- 1.: Hochbett/Hubbett
- 2.: Liegefläche/Matratze
- 3.: Rahmen von 1; 3a, 3b Breitseite; 3c, 3d Längsseite des Rahmens 3
- 4.: Leiter; 4a, 4b Holme; 4c-4f Sprossen; 4g, 4h obere Enden der Holme; 4i, 4j untere freie Enden der Holme; 4k Handgriff
- 5.: Absenkrichtung von 1
- 6.: Linearverschiebungsrichtungen von 4
- 7.: Schwenkrichtungen von 4
- 8.: Verstaurahmen für 4; 8a linke und 8b rechte Führungsschiene; 8c Verbindung für 8a/8b
- 9.: Längsverschiebungsrichtungen
- 10.: C- oder U-förmiger Schlitten; 10a linker und 10b rechter Vertikalschenkel; 10c Verbindung für 10a/10b
- 11.: Schwenklager von 4
- 12.: stangenförmige Führung
- 13.: Nut
- 14.: vordere/untere Zapfen
- 15.: hintere/obere Zapfen
- 16.: Führungsöffnung
- 17.: kleine horizontale Durchgangsnut
- 18.: große horizontale Durchgangsnut
- 19.: große schräge Sacknut; 19a Grund von 19
- 20.: Hochachse von 10a

## Patentansprüche

1. Hochbettleiter (4), insbesondere für ein Hubbett (1) für Fahrzeuge wie Wohnmobile oder Wohnwagen oder dergleichen, wobei das Bett (1) eine Liegefläche (2), einen Rahmen (3), sowie eine dazwischen befindliche Auflage wie z.B. Lattenrost aufweist, und wobei die Leiter (4) in ihrer oberen Stauposition unterhalb der Auflage der Liegefläche (2) verstaubar ist und aus dieser oberen Stauposition in eine obere Zwischenposition ausziehbar ist, sowie von dieser oberen Zwischenposition über mindestens zwei Schwenkgelenke (11) um eine etwa horizontale Achse in eine untere Nutzposition herabschwenkbar ist, wobei die Leiter (4) beim Ausziehen von ihrer oberen Stauposition in ihre obere Zwischenposition mittelbar oder unmittelbar mit einem Schlitten (10) über ihre mindestens zwei Schwenkgelenke (11) verbindbar ist, welche das Abschwenken der Leiter (4) von ihrer oberen Zwischenposition in ihre unteren Nutzposition an dem Schlitten (10) ermöglichen, welcher seitlich verschiebbar ist, etwa parallel zu demjenigen Rahmenteil (3c) des Rahmens (3) des Bettes (1), welches dem Innenraum des Fahrzeugs zugewandt ist.

2. Hochbettleiter nach Anspruch 1, **dadurch gekennzeichnet, dass** der Schlitten (10) mitsamt der Leiter (4) etwa längs zur Liegerichtung des Bettes (1) verschiebbar ist.

3. Hochbettleiter nach Anspruch 1 oder 2, **dadurch gekennzeichnet, dass** die Leiter (4) mit beiden Holmen (4a, 4b) über das Rahmenteil (3c) des Rahmens (3) des Bettes (1), welches dem Innenraum des Fahrzeugs zugewandt ist, derart hinaus verschiebbar ist, dass die oberen Enden (4g, 4h) der Holme (4a, 4b) etwa an dieses Rahmenteil (3c) angrenzen.

4. Hochbettleiter nach einem der Ansprüche 1 bis 3, **dadurch gekennzeichnet, dass** die Längsachse der Leiter (4) in ihrer abgeschwenkten unteren Nutzposition etwa quer zur Liegerichtung des Bettes (1) liegt.

5. Hochbettleiter nach einem der Ansprüche 1 bis 4, **dadurch gekennzeichnet, dass** die Seitenholme (4a, 4b) der Leiter (4) zueinander etwa parallel oder leicht im Winkel von max. +/-10° verlaufen.

6. Hochbettleiter nach einem der Ansprüche 1 bis 5, **dadurch gekennzeichnet, dass** die Schwenkgelenke (11) an den oberen Enden (4g, 4h) der Seitenholme (4a, 4b) der Leiter (4) angeordnet sind.

7. Hochbettleiter nach einem der Ansprüche 1 bis 6, **dadurch gekennzeichnet, dass** die Schwenkgelenke (11) an der obersten Sprosse (4c) der Leiter (4) angeordnet sind, die benachbart zu den oberen Enden (4g, 4h) der Seitenholme (4a, 4b) der Leiter (4) ist.

8. Hochbettleiter nach einem der Ansprüche 1 bis 7, **dadurch gekennzeichnet, dass** die Schwenkgelenke (11) der Leiter (4) als Zapfen oder Nuten ausgebildet sind, die zur Aufnahme in/von zugeordneten Nuten oder Zapfen des verschiebbaren Schlittens (10) dienen.

9. Hochbettleiter nach einem der Ansprüche 1 bis 8, **dadurch gekennzeichnet, dass** der verschiebbare Schlitten (10) C- oder U-förmig ausgebildet ist und zwei etwa vertikale Schenkel (10a, 10b) aufweist, in welche die Zapfen/Nuten für die Aufnahme der damit zusammenwirkenden Nuten/Zapfen der Schwenkgelenke (11) der Leiter (4) eingebracht sind.

10. Hochbettleiter nach einem der Ansprüche 1 bis 9, **dadurch gekennzeichnet, dass** der verschiebbare Schlitten (10) auf einer stangenförmigen Führung (12), die mit dem Rahmen (3) fest verbunden ist, linear verschiebbar aufgenommen ist.

11. Hochbettleiter nach Anspruch 10, **dadurch gekennzeichnet, dass** die Führung (12) als Gleitführung oder Wälzkörperführung ausgebildet ist.

12. Hochbettleiter nach einem der Ansprüche 1 bis 11, **dadurch gekennzeichnet, dass** in der oberen Staustellung der Leiter (4) die Holme (4a, 4b) über an deren Enden (4g, 4h, 4i, 4j) angeordnete hintere/obere Lagerzapfen (15) in zugeordneten Nuten (13) zweier am Rahmen (3) des Bettes (1) befestigten Schienen (8) gelagert sind und in dieser während des Ausziehens der Leiter (4) in die obere Zwischenstellung gleitend geführt sind.

13. Hochbettleiter nach Anspruch 12, **dadurch gekennzeichnet, dass** die hinteren/oberen Lagerzapfen (15) an den oberen Enden (4g, 4h) der Holme (4a, 4b) einen größeren Durchmesser aufweisen, als vordere/untere Lagerzapfen (14) an den unteren Enden (4i, 4j) der Holme (4a, 4b) und dass der Schlitten (10) für jeden Holm (4a, 4b) je eine horizontale Durchgangsnut (17, 18) aufweist, sowie eine davon abzweigende nach schräg unten vom Bett (1) weg verlaufende Sacknut (19), und dass die durchmesserkleineren vorderen/unteren Lagerzapfen (14) durch die horizontalen Durchgangsnute (17, 18) hindurchführbar sind, nicht aber die durchmessergrößeren hinteren/oberen Lagerzapfen (15), die jedoch in die schräg nach unten vom Bett (1) weg verlaufenden Sacknuten (19) zur Auflagerung auf deren Nutgrund (19a) einführbar sind.

14. Hochbettleiter nach Anspruch 13, **dadurch gekennzeichnet, dass** die vorderen/unteren Lagerzapfen (14) in der Staustellung der Leiter (4) in den schräg nach unten vom Bett (1) weg verlaufenden Sacknuten (19) auf deren Nutgrund (19a) auflagern und damit die Leiter gegen axiales Ausziehen (6) sichern.

15. Hochbettleiter nach Anspruch 13 oder 14, **dadurch gekennzeichnet, dass** die hinteren/oberen Lagerzapfen (15) der oberen Enden (4g, 4h) der Holme (4a, 4b), die Schwenkgelenke (11) der Leiter (4) darstellen.

16. Hochbettleiter nach einem der Ansprüche 1 bis 15, **dadurch gekennzeichnet, dass** die Leiter (4) in ihrer oberen Stauposition unterhalb der Auflage der Liegefläche (2) des Bettes (1) in einer Ausnehmung des Rahmens (3) des Bettes (1) aufgenommen ist und nicht oder nur geringfügig nach unten hin über den Rahmen (3) des Bettes (1) hinaus ragt.

17. Hochbettleiter nach einem der Ansprüche 1 bis 16, **dadurch gekennzeichnet, dass** die Liegerichtung des Bettes (1) quer zur Fahrtrichtung des Fahrzeugs liegt.
